# EUROPEAN PATENT SPECIFICATION

(11) **EP 3 516 373 B1**
(45) Date of publication and mention of the grant of the patent: **08.11.2023**
(21) Application number: 16766988.6
(22) Date of filing: 20.09.2016
(51) Int. Cl.: G01N 21/3581, G01B 11/06, G01N 21/84, G01N 21/3586

(54) **METHOD FOR CHARACTERISING A MATERIAL WITH LAYERED STRUCTURE AND A MEASURING SYSTEM**
VERFAHREN ZUR CHARAKTERISIERUNG EINES MATERIALS MIT SCHICHTSTRUKTUR UND MESSSYSTEM
PROCÉDÉ DE CARACTÉRISATION D'UN MATÉRIAU À STRUCTURE EN COUCHES ET SYSTÈME DE MESURE

(43) Date of publication of application: 31.07.2019
(73) Proprietor: Das-Nano Tech, S.L., 31192 Tajonar (ES)
(72) Inventor: LÓPEZ ZORZANO, Alex, 31192 TAJONAR (ES); ETAYO SALINAS, David, 31192 TAJONAR (ES); FERNANDEZ VÁLLEJO, Monserrat, 31192 TAJONAR (ES); CHUDZIK, Magdalena, 31192 TAJONAR (ES); REDÓ SÁNCHEZ, Albert, 31192 TAJONAR (ES); AZANZA LADRÓN, Eduardo, 31192 TAJONAR (ES)
(74) Representative: ZBM Patents - Zea, Barlocci & Markvardsen
(86) International application number: PCT/EP2016/072265
(87) International publication number: WO 2018/054449

(56) References cited:
- WO-A1-2016/102003
- WO-A2-2014/063044
- GB-A- 2 456 643
- US-A1- 2009 231 571
- US-A1- 2016 238 375
- ZHONG S ET AL: "Neural Network-based non-destructive quantification of thin coating by terahertz pulsed imaging in the frequency domain", INFRARED MILLIMETER AND TERAHERTZ WAVES (IRMMW-THZ), 2010 35TH INTERNATIONAL CONFERENCE ON, IEEE, PISCATAWAY, NJ, USA, 5 September 2010 (2010-09-05), pages 1-2, XP031782814, ISBN: 978-1-4244-6655-9

## Description

The present disclosure relates to a method for characterising a material with a layered structure using terahertz radiation and a measuring system for obtaining characterising information of such material with a layered structure.

### BACKGROUND

Automobiles, aircrafts, ships, and large industrial components such as wind turbines are covered by layers of paint and other coatings in order to protect them from the environment (e.g. corrosion, extreme temperature, hazardous chemicals) and to improve the appearance of the product. Often, the thickness of the coatings is directly related with the protection level and appearance provided to the product and, thus, measuring its thickness is an important factor during the manufacturing process.

There are state-of-the-art techniques for the thickness measurement and inspection of thin coatings and paint, including magnetic induction, eddy-current, and acoustic methods. However, these methods offer limitations such as requiring contact with the object, being unable to measure individual layers in multiple layer coatings, requiring the substrate on which the coating is applied to have some specific physical properties (e.g. be a metal), and low resolution and accuracy. Furthermore, these techniques are limited to measure thicknesses and no other properties such as adherence or the presence of defects (e.g. delaminations or air gaps).

Recently, techniques based on electromagnetic radiation in the Terahertz (THz) range have been developed to overcome the above mentioned limitations. THz waves penetrate into a layered material in a contactless manner and the resulting reflections are a function of both structural and chemical properties of the material such as changes in the index of refraction in the different layers.

Typically, the measurement of the thickness of a coating with Terahertz waves is realized using the principle of time-of-flight. As a pulse of THz waves travels through the layers, reflections (or echoes) will be generated at the interfaces between different index of refraction. When such reflected pulses reach the detector, they will be separated in time as a function of the distance travelled. The thickness of the layers can be measured provided that time difference between reflections can be measured precisely and the index of refraction is known.

However, determining the time difference between reflections is challenging in many applications. For instance, reflected pulses show a significant overlap when layers are very thin and, therefore, extracting their position in time becomes a non-trivial issue. Furthermore, different layers can show a similar refraction index, which results in less energy reflected off the interface and, thus, reducing the contrast between pulses. Overcoming these issues, among others, requires developing specific waveform processing techniques. Some methods that have been tested include deconvolution in both time and frequency domains, wavelet decomposition, and peak finding algorithms. However, there is not yet a reliable method that can both measure thicknesses and other parameters, such as adherence, of the coatings at the same time.

The prior art methods also require calibration steps during its operation, which is time consuming and may be prone to suffer from experimental errors. The used systems along with the known methods need for such calibration in order to obtain reliable measurements. Therefore, the known systems and methods may be usually aimed to measure a series of the same parts.

That drawback is even more obvious when the known systems are operated to characterise parts with different construction from each other.

The known measuring systems are usually provided with terahertz emitter and detector positioned away each other. Furthermore, the respective longitudinal axes may be inclined to each other in order to receive a reflected THz beam from the sample. That produces bulky measuring systems which may not be convenient to use, mainly by hand.

Document "Neural Network-based non-destructive quantification of thin coating by terahertz pulsed imaging in the frequency domain" by Zhon S et al., 35th International conference on infrared millimeter and Terahertz waves, IEEE, Piscataway, USA, 5 September 2010, pages 1-2, ISBN: 978-1-4244-6655-9, provides an example of the prior art.

WO2014063044 (A2) discloses a system for interpreting terahertz radiation which includes a terahertz transmitter configured to output a pulse of terahertz radiation and a terahertz receiver configured to receive at least a portion of the pulse of radiation from the terahertz transmitter.

WO2016102003 (A1) discloses devices and methods for determining the quality thin film materials.

GB2456643 (A) discloses a terahertz investigation system and method.

There is a need for a method for characterising a material with a layered structure and a measuring system to solve the above-mentioned problems.

### SUMMARY

In a first aspect, a method for characterising a material with a layered structure using terahertz radiation is disclosed and defined in claim 1. The method comprises determining characterising information of the material with layered structure by implementing at least one machine learning algorithm fed with at least one starting input, the starting input comprising sample data derived from detected signal of a THz-reflected beam after interacting with layered structure of the material.

By implementing the machine learning approach, thicknesses and other parameters, such as adherence, of the material with a layered structure may be reliably measured at the same time.

The present method does not need for calibration steps during its operation, saving time and minimizing experimental errors. Therefore, the disclosed method provides an enhanced robustness and reliability in parameter extraction. The measurement/characterisation cycles take less to finish than prior art methods. The machine learning approach may be fed continuously with the same type of material or with a material with different construction and composition respect the other.

The present method provides a flexible solution for manufacturing, for instance, because the characterisable material/samples may easily vary from one to another.

In another aspect, a measuring system for obtaining characterising information of a material with layered structure is provided and defined in claim 10. The measuring system comprises a control unit in data communication with at least a measuring head, and in data communication with a laser light source, the measuring head comprising:
a terahertz emitter associated with the laser light source and adapted to generate at least one THz-emitted beam to be irradiated on the material,
a terahertz detector associated with the laser light source and adapted to detect a THz-reflected beam from the material,
an optical system designed to guide and focus the THz-emitted beam on the material and to guide and collect the THz-reflected beam from the material,
wherein the control unit is configured to implement a machine learning algorithm on sample data derived from detected signal of the THz-reflected beam.

Owing to the control unit which may be configured to implement the machine learning approach, the present measuring system does not require calibration of the control unit every measuring cycle, in order to provide a reliable measurement/characterisation. The implementation of the machine learning approach improves the robustness and reliability of the present measuring system.

In some examples of the method and/or the measuring system, the characterising information may comprise at least one of the following sample parameters: number of layers, thickness of each layer, layer adherence, presence or absence of pores, delaminations, holes and voids, quality of sanding, spatial position of the interfaces, spatial position of the defects, the combination thereof or a sample parameter calculated as a function thereof.

The presence or absence of pores, delaminations, holes and voids, and quality of sanding may be referred to as undersurface condition of the layered structure and it may be provided by the method and/or the measuring system of the present invention.

In some examples of the measuring system, the optical system may comprise a pitch-catch lens in optical communication with the terahertz emitter and the terahertz detector. That feature has the merit of keeping the measuring head compact.

In some examples of the measuring system, the pitch-catch lens may be a single lens. That feature provides an even more compact measuring head. That single pitch-catch lens may allow near normal incidence of the THz-emitted beam respect to the material while maintaining a reduced spot size without the losses due to the beam-splitting elements of the prior art devices.

In some examples of the measuring system, the terahertz emitter and the terahertz detector may be integrated in the same device. That feature provokes the measuring head to be even more compact.

In another aspect, a computer program product is disclosed and defined in claim 15. The computer program product comprises program instructions for causing a computing system to perform a method for characterising a material with a layered structure using terahertz radiation according to some examples disclosed herein.

The computer program product may be embodied on a storage medium (for example, a CD-ROM, a DVD, a USB drive, on a computer memory or on a read-only memory) or carried on a carrier signal (for example, on an electrical or optical carrier signal).

The computer program may be in the form of source code, object code, a code intermediate source and object code such as in partially compiled form, or in any other form suitable for use in the implementation of the processes. The carrier may be any entity or device capable of carrying the computer program.

For example, the carrier may comprise a storage medium, such as a ROM, for example a CD ROM or a semiconductor ROM, or a magnetic recording medium, for example a hard disk. Furthermore, the carrier may be a transmissible carrier such as an electrical or optical signal, which may be conveyed via electrical or optical cable or by radio or other means.

When the computer program is embodied in a signal that may be conveyed directly by a cable or other device or means, the carrier may be constituted by such cable or another device or means.

Alternatively, the carrier may be an integrated circuit in which the computer program is embedded, the integrated circuit being adapted for performing, or for use in the performance of, the relevant methods.

In yet another aspect, a computing device is disclosed. The device may comprise a memory and a processor. The memory may store computer program instructions executable by the processor. Said instructions may comprise functionality to execute a method for characterising a material with a layered structure according to examples disclosed herein.

In another aspect, it is disclosed a device which may comprise means for determining characterising information of the material with layered structure by implementing at least one machine learning approach fed with at least one starting input, the starting input comprising sample data derived from detected signal from a THz-reflected beam after interacting with layered structure of the material. The characterising information may comprise at least one of the following sample parameters: number of layers, thickness of each layer, layer adherence, presence or absence of pores, delaminations, holes and voids, quality of sanding, spatial position of the interfaces, spatial position of the defects, the combination thereof or a sample parameter calculated as a function thereof.

### DESCRIPTION OF THE DRAWINGS

Non-limiting examples of the present disclosure will be described in the following, with reference to the appended drawings, in which:
Figure 1 is a flow chart of a method for characterising a material with layered structure according to an example;
Figure 2 is a flow chart of an exemplary method to apply THz radiation on a material to be characterised;
Figure 3 schematically illustrates a front view of a measuring system according to an exemplary implementation;
Figure 4 schematically illustrates a side view of a THz-transceiver of a measuring system according to another exemplary implementation;
Figure 5 schematically illustrates a plan view of the THz-transceiver of the figure 4; and
Figure 6 schematically illustrates a front view of another example of the measuring system.

### DETAILED DESCRIPTION OF EXAMPLES

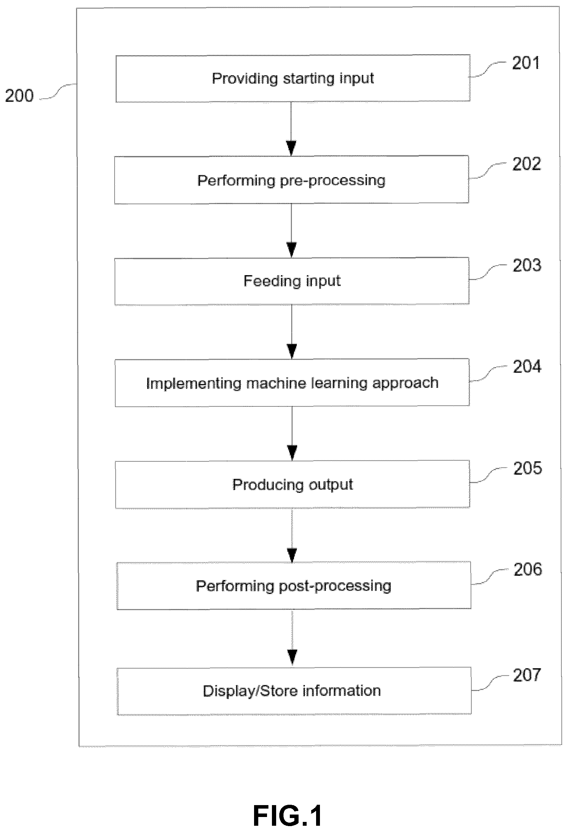

Figure 1 is a flow chart of a method 200 for characterising a material 100 or sample with layered structure using terahertz radiation, according to the invention. The method 200 may determine characterising information of the material 100 with layered structure by implementing 204 a machine learning approach fed 203 with a starting input as will be depicted. The machine learning approach is implemented through machine-learning algorithms.

By implementing 204 the machine learning approach, characterising information of the material 100 may be determined. The characterising information may comprise at least one of the following sample parameters: number of layers, thickness of each layer, layer adherence, presence or absence of pores, delaminations, holes and voids, quality of sanding, spatial position of the interfaces, spatial position of the defects, the combination thereof or a sample parameter calculated as a function thereof. The sample parameter may refers to the entire layered structure or at least one layer of the material 100.

Therefore, examples of possible characterising information may comprise:
- Thickness of each of the layers in a multiple layer coating;
- Adherence and surface condition (e.g. sanded versus non-sanded or grinded surface) of a painted substrate in order to measure poor surface preparation previous to being covered by the paint or another coating. Detecting such condition may help preventing future painting delaminations, cracks, and damage directly related to such poor surface preparation conditions;
- Detection of pores, holes, and voids including shape and dimensions;
- Tape adherence: the adhesiveness and adherence condition of protective tape, for example, tape used to reinforce the border of attack (BOA) of wind turbine blades, can be inspected in search for the presence of pores, holes and "orange" skin;
- Inspection of glued structures: glued structures may be inspected for the detection of voids and holes, which can become the starting point or nucleation of larger defects such as delaminations or cracks.

In the invention, the method 200 comprises providing a starting input 201 wherein the starting input may comprise sample data directly or indirectly derived from a detected signal of a THz-reflected beam 42 after interacting with the layered structure of the material 100. The detected signal of the THz-reflected beam 42 may comprise at least one of: a time-domain signal, a frequency-domain signal, or the combination thereof; in those cases they may be directly derived from the detected signal. The detected signal of the THz-reflected beam 42 may be obtained by generating at least one terahertz time-domain waveform of the THz-reflected beam 42; the terahertz time-domain waveform would be a possible example of a time-domain signal.

According to some examples, the machine learning approach may be based on deep-learning. The machine learning approach may implement at least one neural network. Different neural network architectures may be used in conjunction depending on the number of parameters of the characterising information.

In one example the neural network may implement one or more convolutional networks which may comprise convolutional layers to extract the characterising information from the starting input. The convolutional network may implement one or more contracting paths that apply pooling operations to downsample network data between the convolutional layers. The network data are sample data which are processed by the convolutional layers and correspond to intermediate states between the convolutional layers. This down-sampling reduces the dimensionality of the network data. Each convolutional layer may extract finer network data than the previous layer.

The convolutional network may implement at least one expansive path that applies up-sampling to the network data between the convolutional layers. This expansive path may enable the identification and matching of the network data extracted by the contracting path layers.

In some examples the neural network may go through a training and validation processes. The training and validation processes may be performed prior to determining the characterising information of the material 100 with layered structure. In some other cases, the training and validation processes may not be necessary, since the machine learning approach may be able to produce reliably an output from the input. The training and validation processes may be of a supervised type.

In some examples the neural network may be trained using a training method which may comprise feeding the neural network with input network data and their corresponding down-sampled versions of the network data. The input network data and the down-sampled versions of the network data may be combined with their corresponding characterising information. The input network data may comprise known sample data and known corresponding characterising information. The input network data may be related to a number of exemplary material 100 (or samples). As the characterising information related to the "training" input network data is known, the machine learning "learns" to calculate/produce the characterising information for other unknown materials 100 based on the "training" input network data or datasets.

In one example the training method may further comprise adjusting the network parameters using stochastic gradient descent or another minimization algorithm. A target function may be computed by combining a pixel by pixel soft-max value with a cross entropy loss function or similar hybridization between local and global network data.

The validation process may comprise feeding "validation" input network data or datasets of a THz-reflected beam corresponding to at least one layer-structured material 100 with known characterising information, the "validation" input network data of the THz-reflected beam may be different from the "training" input network data of the THz-reflected beam. This validation process allows estimating the performance and error of the neural network/s.

If the training and the validation processes are implemented, they have to be completed once in a while. It is not required to be performed at every single measurement carried out following the present method 200.

Alternatively, to the neural network, the machine learning approach may comprise a process for retrieving a feature of the detected signal and a process for identifying such feature by clustering. The process for retrieving a feature may be based on probabilistic calculations using amplitude and derivative values in one or more points of a waveform from detected signal from a THz-reflected beam 42. The waveform may be of a time-domain type.

That feature may be a set of locations of extremal values in the detected signal of the THz-reflected beam 42. These extremal values may correspond to pulses reflected off the different interfaces in a sample of material 100, for instance.

In one example the probabilistic calculations may comprise determining a probability of a point in the waveform of being extremal, by calculating the product of probability of the amplitude of the point of being maximum and probability of its derivative of being zero; the probabilities may be calculated according to a probability density function. The skilled person could apply any other suitable function for instance the error function for Gaussian noise.

In some examples prior to determining a probability of a point in the waveform of being extremal, the method 200 may further comprise normalizing the amplitude and derivative values of the point in the waveform from detected signal respect their respective standard deviations. The normalized amplitude and derivative values of a point in the waveform may be used to define normalized energy level for the point in the waveform. The method may also comprise filtering a point in the waveform based on a predefined normalized energy level threshold. That threshold may be used to determine whether a point in the waveform may be a feature candidate or not. The normalized energy threshold may be adjusted depending on each case.

In one example the method 200 may further comprise setting a sensibility to detect a feature by adjusting the normalized energy level threshold and a confidence level of the probability of a point in the waveform of being extremal. Reducing the normalized energy level threshold will increase the sensitivity of the method 200 in detecting features in noisy signals. Conversely, increasing the normalized energy level threshold will reduce the sensitivity in detecting such features. Reducing the confidence level will increase the number of candidate positions around a feature. Conversely, increasing the confidence level will reduce the number of candidates around that feature.

According to one example the process for identifying a feature by clustering may comprise using a clustering algorithm for processing a candidate for extremal value. The feature candidates may be clustered using a clustering algorithm in order to generate a cluster to identify the position and thickness of each layer.

According to some examples, the starting input may comprise sample data derived from detected signal of the THz-reflected beam 42 relative to each of multiple single points on the material 100, the multiple single points defining at least one line. The starting input may comprise sample data relative to different single points defining at least one line, and the sample data may be arranged as two-dimensional dataset of the material 100 to be characterised. That could be the case for characterising the material 100 relative to at least one cross-section thereof (two dimensions).

In some examples the starting input may comprise sample data derived from detected signal of the THz-reflected beam 42 relative to each of multiple single points on the material 100, the multiple single points defining at least one area. The starting input may comprise sample data relative to different single points defining at least one area, and the sample data may be arranged as three-dimensional dataset of the material 100 to be characterised. That could be the case for characterising the material 100 relative to at least one volume thereof (three dimensions).

The machine learning approach is configured so that the starting input is arranged as 2D for 3D dataset derived from the detected signal of the THz-reflected beam.

The method 200 may further comprise performing a transformation and pre-processing process 202 on the starting input prior to be fed to the machine learning approach. The pre-processing process 202 may be implemented to generate a more suitable starting input for feeding the machine learning approach. According to some examples the transformation and pre-processing process may comprise at least one of the following:
wavelet decomposition,
statistical denoising,
peak finding and clustering,
de-convolution,
spatial filtering and smoothing,
fast Fourier transform, so that a frequency-domain signal may be obtained from a time-domain signal,
edge detection algorithms,
computing an average,
or a combination thereof.

The machine learning algorithm is fed 203 with the starting input. The starting input comprises data derived from detected signal of a THz-reflected beam 42 after interacting with layered structure of the material 100. That starting input may be pre-processed 202 or not depending on the situation, so the machine learning approach could be directly fed with any unprocessed data derived from detected signal of a THz-reflected beam 42.

After implementing 204 the machine learning algorithm an output is produced 205. This output comprises produced data related to the characterisation of the material 100, with two or three-dimensional recognized pattern.

The method 200 may further comprise performing a post-processing process 206 on the output of the machine learning algorithm in order to obtain the characterising information. In some examples, the post-processing process 206 may comprise at least one of the following:
segmentation,
discretization and clustering,
edge detection,
classification,
or a combination thereof.

As mentioned above regarding the pre-processing 202, the post-processing process 206 may be performed or not depending on the situation. The unprocessed output could be adequate for a particular application.

The method 200 may further comprise displaying the characterising information and/or storing the characterising information 207. The characterising information may be displayed by using any proper interface and may be stored by any suitable means, therefore, the user may be provided by the stored characterising information of the entire material 100 when the method 200 may be partially or fully finished.

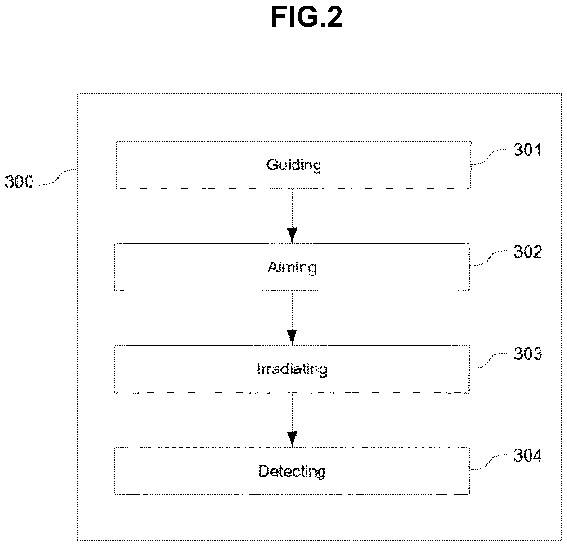

Figure 2 is a flow chart of an exemplary method 300 to apply THz radiation on a material to be characterised. The present method 200 for characterising a material 100 with layered structure using terahertz radiation may further comprise the method 300 to apply THz radiation on the material. However, it can be envisaged that the method 300 for applying THz radiation on the material 100 may be performed separately. The detected signal of a THz-reflected beam 42 may be stored and/or sent for feeding later the machine learning algorithm.

Therefore, the detected signal of the THz-reflected beam 42 may be produced by any suitable method.

If the present method 200 for characterising a material 100 with layered structure further comprises the method 300 to apply THz radiation on the material, then method 200 may further comprise, prior to determining characterising information:
irradiating the material with a THz-emitted beam 41, the THz-emitted beam 41 interacting with the material 100 with layered structure,
detecting a THz-reflected beam 42 from the material 100 with layered structure.

The method 200 may further comprise, prior to irradiating the material with a THz-emitted beam 41, aiming a measuring head 3 of a measuring system 1 at a point of the material 100 to be characterised. According to an example the measuring head 3 may be guided following a predetermined way in order to aim the measuring head 3 at different points (e.g. randomly, following a line or over an area) of the material 100 to be characterised.

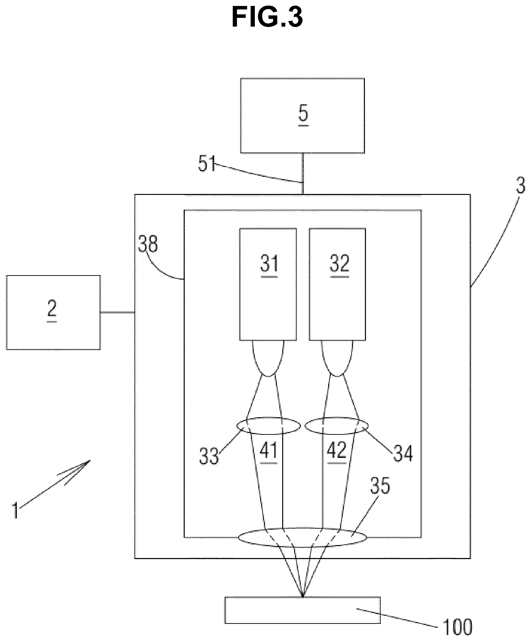

Figure 3 schematically illustrates a front view of a measuring system 1 according to the invention. The measuring system 1 for obtaining characterising information of the material 100 with layered structure comprises a control unit 2 in data communication with at least a measuring head 3, and in data communication with a laser light source 5, the measuring head 3 may comprise:
a terahertz emitter 31 associated with the laser light source 5 and adapted to generate at least one THz-emitted beam 41 to be irradiated on the material 100,
a terahertz detector 32 associated with the laser light source 5 and adapted to detect a THz-reflected beam 42 from the material 100,
an optical system 33, 34, 35 designed to guide and focus the THz-emitted beam 41 on the material 100 and to guide and collect the THz-reflected beam 42 from the material 100,
wherein the control unit 2 is configured to implement a machine learning algorithm on sample data derived from detected signal of the THz-reflected beam 42.

The characterising information may comprise at least one of the following sample parameters: number of layers, thickness of each layer, layer adherence, presence or absence of pores, delaminations, holes and voids, quality of sanding, spatial position of the interfaces, spatial position of the defects, the combination thereof or a sample parameter calculated as a function thereof.

According to the invention, the present measuring system 1 performs the method 200 for characterising a material 100 with terahertz radiation.

The terahertz emitter 31 and the terahertz detector 32 may use THz radiation pulses which may comprise electromagnetic radiation in the frequency range within 0.1 to 10 THz.

The material 100 may comprise a plurality of layers. Examples thereof may be coated parts for cars, aircrafts, ships, wind turbines, etc. An example of coating may be a plurality of paint layers.

According to some examples of the measuring system 1, the machine learning approach may be based on deep-learning. The machine learning approach may implement at least one neural network. Different neural network architectures may be used in conjunction depending on the number of parameters of the characterising information.

As above mentioned, the machine learning approach may alternatively comprise a process for retrieving a feature of the detected signal of the THz-reflected beam 42, and a process for identifying such features by clustering. The process for retrieving a feature may be based on probabilistic calculations using amplitude and derivative values in at least one point of the waveform from detected signal from a THz-reflected beam 42 as has been depicted above.

As above mentioned, the feature may be a set of locations of extremal values in the detected signal of the THz-reflected beam 42.

In one example the optical system may comprise a pitch-catch lens 35 in optical communication with the terahertz emitter 31 and the terahertz detector 32.

By guiding and focus the THz-emitted beam 41 on the material 100 and to guide and collect the THz-reflected beam 42 from the material 100, an angle of incidence (not shown) may be generated. In some examples the angle of incidence may be equal to or less than 8 degrees. However, the angle of incidence may vary depending on each case.

In some examples of the measuring system, the pitch-catch lens 35 may be a single lens. The pitch-catch lens 35 may be a plano-convex lens. According to one example the pitch-catch lens 35 may be made of a material with low attenuation in the THz range, for instance a polymeric lens made from high-density polyethylene (HDPE), TPX, Teflon^{™}.

In the measuring system 1 according to an example, the terahertz emitter 31 and the terahertz detector 32 may be integrated in the same device/apparatus, i. e. they may be integrally formed so the angle of incidence would be zero degrees.

In some examples, the control unit 2, the measuring head 3 and the laser light source 5 may be configured integrally, so as to keep the measuring system 1 compact.

As per figure 3, the terahertz emitter 31 and the terahertz detector 32 may be associated with the laser light source 5 by means of a waveguide 51. The waveguide 51 may be more rigid or flexible depending on the needs. The waveguide 51 may comprise optical fiber and/or electric wires.

As can be seen in figure 3, the present measuring system 1 may comprise an THz-transceiver 38 where the terahertz emitter 31, the terahertz detector 32 and the optical system may be located; that THz-transceiver 38 may be configured as a frame or the like placed inside the measuring head 3.

Figure 3 also shows that the measuring head 3 (and/or the THz-transceiver 38) may be configured such that the path of the THz-emitted beam 41 generated by the terahertz emitter 31 and the path of the THz-reflected beam 42 received by the terahertz detector 32 may be substantially parallel to each other particularly in a location between the terahertz emitter 31 and detector 32 and the pitch-catch lens 35. Paths do not cross each other so a better guiding may be achieved and losses may be reduced.

In some examples, the terahertz emitter 31 and the terahertz detector 32 may be mounted substantially in parallel. That example is illustrated by figure 3, for instance, and may allow keeping the measuring head 3 (and/or the THz-transceiver 38) still more compact so that it can be easier to be handled by a human operator or a robotic arm.

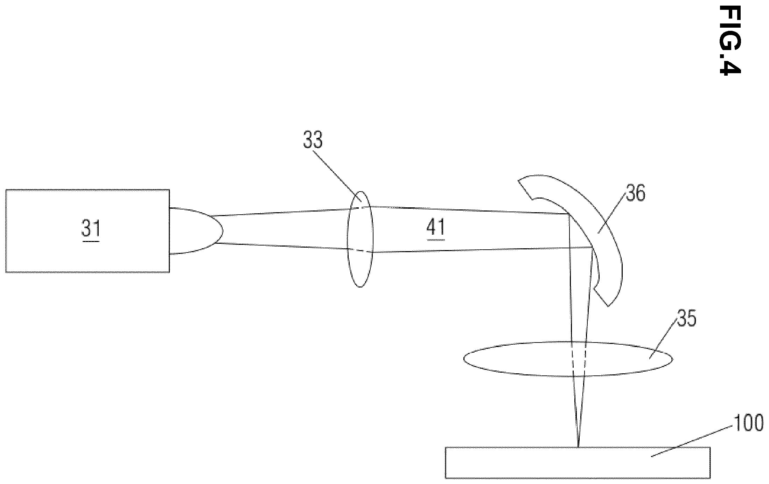

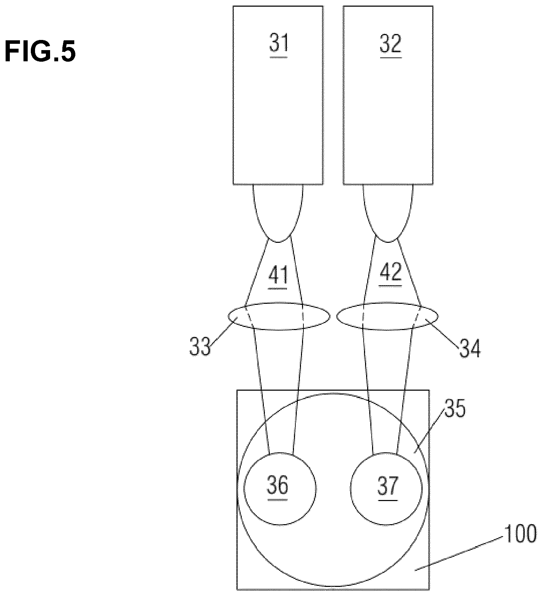

Figure 4 schematically illustrates a side view of a THz-transceiver 38 of the measuring system 1 according to another exemplary implementation. Figure 5 schematically illustrates a plan view of the THz-transceiver 38 of the figure 4. It can be seen that in some examples the optical system may further comprise a mirror 36 between the terahertz emitter 31 and the pitch-catch lens 35. The optical system may also comprise a mirror 37 between the pitch-catch lens 35 and the terahertz detector 32 so that the THz-emitted beam 41 and the THz-reflected beam 42 may be bent by a predefined angle. The provision of the mirror 36, 37 allows to dispose the terahertz emitter 31 and the terahertz detector 32 so that their longitudinal axes may form an angle to the normal of the material 100. The presence of the mirrors 36, 37 may provide a flexible construction of the measuring head 3 (and/or the THz-transceiver 38) since the terahertz emitter 31 and the terahertz detector 32 may be positioned at any location and orientation depending on the needs. Therefore, the measurements may be carried out on different planes.

In some examples, the measuring head 3 may further comprise a driving device (not shown) associated with the terahertz emitter 31, the terahertz detector 32 and the optical system (which may be located inside the THz-transceiver 38) such that the terahertz emitter 31, the terahertz detector 32 and the optical system may be movable relative to the material 100.. A possible example of the driving device may comprise a linear stage. The driving device may allow to move the THz emitter 31 and THz detector 32 in parallel to the material 100 or coated surface.

In some examples the measuring head 3 may be configured to be manually or automatically handled.

The measuring system 1 according to some examples, may further comprise a mechanical arm (not shown) coupled to the measuring head 3. The mechanical arm may be robotized and may comprise means to ensure that the position and orientation of the measuring head 3 is optimal for an accurate measurement in case the measuring head 3 is operated manually. That means may be differently embodied, for example, the measuring head 3 may further comprise a part (not shown) being designed to be in contact with the material 100 during a measurement operation. In some examples the measuring system 1 may further comprise a positioning system (not shown) configured to automatically control the measuring head 3. Other possible embodiments may be envisaged such as a pointing device (not shown), for instance, a visible light emitter or laser pointer to help aiming and identifying the point or area under measurement.

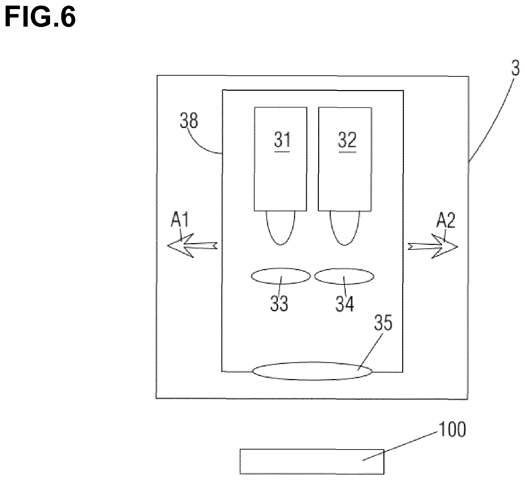

Another embodiment may comprise an active compensation system (not shown) configured to monitoring the orientation and distance of the terahertz emitter 31, the terahertz detector 32 and the optical system respect to the material 100 such that the orientation and distance are kept within predetermined measuring parameters. The active compensation system may comprise the THz-transceiver 38 which may be configured to be movable respect to the measuring head 3 so the measuring head 3 may fixed in place during operation and the THz-transceiver 38 may be moved relative to both the material 100 or sample and the measuring head 3. In figure 6 arrows A1, A2 depict two exemplary movement directions of the THz-transceiver 38 but other directions may be obviously envisaged. Any kind of driving means may be used to provoke the relative movement of the THz-transceiver 38 with respect to the measuring head 3.

The measuring system 1 according to some examples may further comprise a sensing device (not shown) in data communication with the control unit 2, the sensing device may be configured to provide data on position and orientation of the measuring head 3 relative to the material 100.

In some examples the measuring head 3 may further comprise support components (not shown) that allow the measuring head 3 to be attached to the material 100 or sample with layered structure.

In some examples the measuring system 1 may comprise a screen or the like (not shown) for displaying the measurement data (characterising information). The measuring system 1 may also comprise a storing arrangement for storing the characterising information in an electronic format or an input signal to be bed to the machine learning approach.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow. If reference signs related to drawings are placed in parentheses in a claim, they are solely for attempting to increase the intelligibility of the claim, and shall not be construed as limiting the scope of the claim.

Furthermore, although the examples described with reference to the drawings comprise computing apparatus/systems and processes performed in computing apparatus/systems, the invention also extends to computer programs, particularly computer programs on or in a carrier, adapted for putting the system and method into practice.

## Claims

1. Method (200) for characterising a material (100) with a layered structure using terahertz radiation, the method comprising:
determining characterising information of the material with layered structure by implementing (204) at least one machine learning algorithm fed (203) with at least one starting input, the starting input comprising sample data derived from detected signal of a THz-reflected beam (42) after interacting with layered structure of the material, wherein
the starting input comprises sample data derived from detected signal of the THz-reflected beam relative to each of multiple single points on the material, the multiple single points defining at least one line or one area, **characterized in that** the sample data is arranged as two-dimensional or three-dimensional dataset of the material to be characterised;
wherein the method comprises:
producing an output (205) comprising produced data related to the characterisation of the material, the output being a two or three-dimensional recognized pattern.

2. Method (200) according to claim 1, wherein the characterising information comprises at least one of the following sample parameters: number of layers, thickness of each layer, layer adherence, presence or absence of pores, delaminations, holes and voids, quality of sanding, spatial position of the interfaces, spatial position of the defects, the combination thereof or a sample parameter calculated as a function thereof.

3. Method (200) according to claim 2, wherein the sample parameter refers to the entire layered structure or at least one layer of the material.

4. Method (200) according to any of claims 1-3, wherein the detected signal of the THz-reflected beam comprises at least one of: a time-domain signal, a frequency-domain signal, or the combination thereof,
wherein the detected signal of the THz-reflected beam is obtained by generating at least one terahertz time-domain waveform of the THz-reflected beam,
wherein the machine learning algorithm comprises a process for retrieving a feature of the detected signal and a process for identifying such feature by clustering, the process for retrieving a feature being based on probabilistic calculations using amplitude and derivative values in at least one point of a waveform from detected signal from a THz-reflected beam.

5. Method (200) according to claim 4, wherein a feature is a set of locations of extremal values in the detected signal of the THz-reflected beam.

6. Method (200) according to any of claims 1-4, wherein the machine learning algorithm implements at least one neural network.

7. Method (200) according to claim 6, wherein the neural network implements at least one convolutional network comprising convolutional layers to extract characterising information from the starting input.

8. Method (200) according to claim 1, wherein the starting input comprises sample data relative to different single points defining at least one line, the sample data being arranged as two-dimensional dataset of the material to be characterised.

9. Method (200) according to claim 1, wherein the starting input comprises sample data relative to different single points defining at least one area, the sample data being arranged as three-dimensional dataset of the material to be characterised.

10. A measuring system (1) for obtaining characterising information of a material (100) with layered structure, the measuring system comprising a control unit (2) in data communication with at least a measuring head (3), and in data communication with a laser light source (5), the measuring head comprising:
a terahertz emitter (31) associated with the laser light source and adapted to generate at least one THz-emitted beam (41) to be irradiated on the material,
a terahertz detector (32) associated with the laser light source and adapted to detect a THz-reflected beam (42) from the material,
an optical system (33, 34, 35) designed to guide and focus the THz-emitted beam on the material and to guide and collect the THz-reflected beam from the material,
wherein the control unit is configured to implement a machine learning algorithm on sample data derived from detected signal of the THz-reflected beam,
wherein the sample data is relative to each of multiple single points on the material, the multiple single points defining at least one line or one area, **characterized in that** the sample data being arranged as two-dimensional or three-dimensional dataset of the material to be characterised,
wherein the control unit is configured to produce an output comprising produced data related to the characterisation of the material, the output being a two or three-dimensional recognized pattern.

11. Measuring system (1) according to claim 10, wherein the measuring head (3) further comprises a driving device associated with the terahertz emitter (31), the terahertz detector (32) and the optical system (33, 34, 35) such that the terahertz emitter, the terahertz detector and the optical system are movable relative to the material.

12. Measuring system (1) according to any of claims 10-11, wherein the measuring head (3) is configured to be manually handled.

13. Measuring system (1) according to any of claims 10-11, wherein the measuring head (3) is configured to be automatically operated.

14. Measuring system (1) according to claim 10, further comprising support components adapted to attach the measuring head (3) to the material or sample with layered structure.

15. A computer program product comprising program instructions for causing a computing system to perform a method for characterising a material with layered structure according to any of claims 1 to 9.

## Patentansprüche

1. Verfahren (200) zum Charakterisieren eines Materials (100) mit einer Schichtstruktur unter Verwendung von Terahertz-Strahlung, wobei das Verfahren Folgendes umfasst:
bestimmen von charakterisierenden Informationen des Materials mit Schichtstruktur durch Implementieren (204) von mindestens einem maschinellen Lernalgorithmus, der mit mindestens einem Starteingang gespeist wird (203), wobei der Starteingang Probendaten umfasst, die aus dem erfassten Signal eines THz-reflektierten Strahls (42) nach der Interaktion mit der Schichtstruktur des Materials abgeleitet werden, wobei
der Starteingang Probendaten umfasst, die aus dem erfassten Signal des THz-reflektierten Strahls relativ zu jedem von mehreren einzelnen Punkten auf dem Material abgeleitet sind, wobei die mehreren einzelnen Punkte mindestens eine Linie oder einen Bereich definieren, **dadurch gekennzeichnet, dass** die Probendaten als zweidimensionaler oder dreidimensionaler Datensatz des zu charakterisierenden Materials angeordnet sind;
wobei das Verfahren Folgendes umfasst:
erzeugen von einer Ausgabe (205), die erzeugte Daten in Bezug auf die Charakterisierung des Materials umfasst, wobei die Ausgabe ein zwei- oder dreidimensionales erkanntes Muster ist.

2. Verfahren (200) nach Anspruch 1, wobei die charakterisierenden Informationen mindestens einen von den folgenden Probenparametern umfasst: Anzahl der Schichten, Dicke jeder Schicht, Schichthaftung, Vorhandensein oder Fehlen von Poren, Delaminationen, Löchern und Hohlräumen, Qualität des Schleifens, räumliche Position der Grenzflächen, räumliche Position der Defekte, die Kombination davon oder ein als Funktion davon berechneter Probenparameter.

3. Verfahren (200) nach Anspruch 2, wobei sich der Probenparameter auf die gesamte Schichtstruktur oder mindestens eine Schicht des Materials bezieht.

4. Verfahren (200) nach einem der Ansprüche 1 bis 3, wobei das erfasste Signal des THz-reflektierten Strahls mindestens eines von den Folgenden umfasst: ein Zeitbereichssignal, ein Frequenzbereichssignal oder die Kombination davon,
wobei das erfasste Signal des THz-reflektierten Strahls durch Erzeugen von mindestens einer Terahertz-Zeitbereichswellenform des THz-reflektierten Strahls erhalten wird,
wobei der Algorithmus für maschinelles Lernen einen Prozess zum Abrufen von einem Merkmal des erfassten Signals und einen Prozess zum Identifizieren von einem solchen Merkmal durch Clustering umfasst, wobei der Prozess zum Abrufen von einem Merkmal auf probabilistischen Berechnungen unter Verwendung von Amplituden- und Ableitungswerten an mindestens einem Punkt einer Wellenform von dem erfassten Signal von einem THz-reflektierten Strahl basiert.

5. Verfahren (200) nach Anspruch 4, wobei ein Merkmal ein Satz von Positionen von Extremwerten in dem erfassten Signal des THz-reflektierten Strahls ist.

6. Verfahren (200) nach einem der Ansprüche 1 bis 4, wobei der Algorithmus für maschinelles Lernen mindestens ein neuronales Netzwerk implementiert.

7. Verfahren (200) nach Anspruch 6, wobei das neuronale Netzwerk mindestens ein Faltungsnetzwerk implementiert, das Faltungsschichten umfasst, um charakterisierende Informationen von der Starteingabe zu extrahieren.

8. Verfahren (200) nach Anspruch 1, wobei die Starteingabe Probendaten relativ zu verschiedenen einzelnen Punkten umfasst, die mindestens eine Linie definieren, wobei die Probendaten als zweidimensionaler Datensatz des zu charakterisierenden Materials angeordnet sind.

9. Verfahren (200) nach Anspruch 1, wobei die Starteingabe Probendaten relativ zu verschiedenen einzelnen Punkten umfasst, die mindestens einen Bereich definieren, wobei die Probendaten als dreidimensionaler Datensatz des zu charakterisierenden Materials angeordnet sind.

10. Ein Messsystem (1) zum Erhalten von charakterisierenden Informationen eines Materials (100) mit Schichtstruktur, wobei das Messsystem eine Steuereinheit (2) in Datenkommunikation mit mindestens einem Messkopf (3) und in Datenkommunikation mit einer Laserlichtquelle (5) umfasst, wobei der Messkopf Folgendes umfasst:
einen Terahertz-Emitter (31), der der Laserlichtquelle zugeordnet ist und dazu ausgelegt ist, mindestens einen THz-emittierten Strahl (41) zu erzeugen, der auf das Material eingestrahlt werden soll,
einen Terahertz-Detektor (32), der der Laserlichtquelle zugeordnet ist und dazu ausgelegt ist, einen THz-reflektierten Strahl (42) von dem Material zu detektieren,
ein optisches System (33, 34, 35), das dazu ausgelegt ist, den THz-emittierten Strahl auf das Material zu führen und zu fokussieren und den THz-reflektierten Strahl aus dem Material zu führen und zu sammeln,
wobei die Steuereinheit dazu konfiguriert ist, einen maschinellen Lernalgorithmus auf Probedaten zu implementieren, die von dem erfassten Signal des THz-reflektierten Strahls abgeleitet sind,
wobei die Probendaten auf jeden von mehreren Einzelpunkten auf dem Material bezogen sind, wobei die mehreren Einzelpunkte mindestens eine Linie oder einen Bereich definieren, **dadurch gekennzeichnet, dass** die Probendaten als zweidimensionaler oder dreidimensionaler Datensatz des zu charakterisierenden Materials angeordnet sind,
wobei die Steuereinheit dazu konfiguriert ist, eine Ausgabe zu erzeugen, die erzeugte Daten in Bezug auf die Charakterisierung des Materials umfasst, wobei die Ausgabe ein zwei- oder dreidimensionales erkanntes Muster ist.

11. Messsystem (1) nach Anspruch 10, wobei der Messkopf (3) ferner eine Antriebsvorrichtung umfasst, die dem Terahertz-Emitter (31), dem Terahertz-Detektor (32) und dem optischen System (33, 34, 35) zugeordnet ist, so dass der Terahertz-Emitter, der Terahertz-Detektor und das optische System relativ zu dem Material beweglich sind.

12. Messsystem (1) nach einem der Ansprüche 10 bis 11, wobei der Messkopf (3) konfiguriert ist, um manuell gehandhabt zu werden.

13. Messsystem (1) nach einem der Ansprüche 10 bis 11, wobei der Messkopf (3) konfiguriert ist, um automatisch betrieben zu werden.

14. Messsystem (1) nach Anspruch 10, ferner umfassend Stützkomponenten, die angepasst sind, um den Messkopf (3) an dem Material oder der Probe mit einer Schichtstruktur zu befestigen.

15. Ein Computerprogrammprodukt umfassend Programmanweisungen, um ein Computersystem zu veranlassen, ein Verfahren zum Charakterisieren eines Materials mit einer Schichtstruktur nach einem der Ansprüche 1 bis 9 durchzuführen.

## Revendications

1. Procédé (200) de caractérisation d'un matériau (100) avec une structure en couches en utilisant du rayonnement térahertz, le procédé comprenant :
déterminer les informations de caractérisation du matériau à structure en couches en mettant en oeuvre (204) au moins un algorithme d'apprentissage automatique alimenté (203) par au moins une entrée de départ, l'entrée de départ comprenant des données d'échantillon dérivées du signal détecté d'un faisceau réfléchi en THz (42) après interaction avec la structure en couches du matériau, dans lequel
l'entrée de départ comprend des données d'échantillon dérivées du signal détecté du faisceau réfléchi en THz par rapport à chacun des multiples points uniques sur le matériau, les multiples points uniques définissant au moins une ligne ou une zone, **caractérisé en ce que** les données d'échantillon sont agencées en tant qu'ensemble de données bidimensionnel ou tridimensionnel du matériau à caractériser ;
dans lequel le procédé comprend :
produire une sortie (205) comprenant des données produites liées à la caractérisation du matériau, la sortie étant un motif reconnu bidimensionnel ou tridimensionnel.

2. Procédé (200) selon la revendication 1, dans lequel les informations de caractérisation comprennent au moins l'un des paramètres d'échantillon suivants : le nombre de couches, l'épaisseur de chaque couche, l'adhérence de la couche, la présence ou l'absence de pores, les délaminations, les trous et les vides, la qualité du ponçage, la position spatiale des interfaces, la position spatiale des défauts, la combinaison de ceux-ci ou un paramètre d'échantillon calculé en fonction de ceux-ci.

3. Procédé (200) selon la revendication 2, dans lequel le paramètre d'échantillon fait référence à la totalité de la structure en couches ou à au moins une couche du matériau.

4. Procédé (200) selon l'une quelconque des revendications 1 à 3, dans lequel le signal détecté du faisceau réfléchi en THz comprend au moins l'un des éléments suivants : un signal dans le domaine temporel, un signal dans le domaine fréquentiel, ou la combinaison de ceux-ci,
dans lequel le signal détecté du faisceau réfléchi en THz est obtenu en générant au moins une forme d'onde dans le domaine temporel des térahertz du faisceau réfléchi en THz,
dans lequel l'algorithme d'apprentissage automatique comprend un processus pour extraire une caractéristique du signal détecté et un processus pour identifier une telle caractéristique par regroupement, le processus pour extraire une caractéristique étant basé sur des calculs probabilistes utilisant des valeurs d'amplitude et de dérivée dans au moins un point d'une forme d'onde à partir du signal détecté à partir d'un faisceau réfléchi en THz.

5. Procédé (200) selon la revendication 4, dans lequel une caractéristique est un ensemble d'emplacements de valeurs extrêmes dans le signal détecté du faisceau réfléchi en THz.

6. Procédé (200) selon l'une quelconque des revendications 1 à 4, dans lequel l'algorithme d'apprentissage automatique met en oeuvre au moins un réseau neuronal.

7. Procédé (200) selon la revendication 6, dans lequel le réseau neuronal met en oeuvre au moins un réseau convolutif comprenant des couches convolutives pour extraire des informations de caractérisation à partir de l'entrée de départ.

8. Procédé (200) selon la revendication 1, dans lequel l'entrée de départ comprend des données d'échantillon relatives à de différents points uniques définissant au moins une ligne, les données d'échantillon étant agencées en tant qu'ensemble de données bidimensionnel du matériau à caractériser.

9. Procédé (200) selon la revendication 1, dans lequel l'entrée de départ comprend des données d'échantillon relatives à de différents points uniques définissant au moins une zone, les données d'échantillon étant agencées comme un ensemble de données tridimensionnelles du matériau à caractériser.

10. Un système de mesure (1) pour obtenir des informations de caractérisation d'un matériau (100) avec une structure en couches, le système de mesure comprenant une unité de commande (2) en communication de données avec au moins une tête de mesure (3), et en communication de données avec une source de lumière laser (5), la tête de mesure comprenant :
un émetteur térahertz (31) associé à la source de lumière laser et adapté pour générer au moins un faisceau émis en THz (41) à irradier sur le matériau,
un détecteur térahertz (32) associé à la source de lumière laser et adapté pour détecter un faisceau réfléchi en THz (42) à partir du matériau,
un système optique (33, 34, 35) conçu pour guider et focaliser le faisceau émis en THz sur le matériau et pour guider et collecter le faisceau réfléchi en THz à partir du matériau,
dans lequel l'unité de commande est configurée pour mettre en oeuvre un algorithme d'apprentissage automatique sur des données d'échantillon dérivées du signal détecté du faisceau réfléchi en THz,
dans lequel les données d'échantillon sont relatives à chacun des multiples points uniques sur le matériau, les multiples points uniques définissant au moins une ligne ou une zone, **caractérisé en ce que** les données d'échantillon sont agencées en tant qu'ensemble de données bidimensionnel ou tridimensionnel du matériau à caractériser,
dans lequel l'unité de commande est configurée pour produire une sortie comprenant des données produites liées à la caractérisation du matériau, la sortie étant un motif reconnu bidimensionnel ou tridimensionnel.

11. Système de mesure (1) selon la revendication 10, dans lequel la tête de mesure (3) comprend en outre un dispositif d'entraînement associé à l'émetteur térahertz (31), au détecteur térahertz (32) et au système optique (33, 34, 35) de sorte que l'émetteur térahertz, le détecteur térahertz et le système optique sont mobiles par rapport au matériau.

12. Système de mesure (1) selon l'une quelconque des revendications 10 à 11, dans lequel la tête de mesure (3) est configurée pour être manipulée manuellement.

13. Système de mesure (1) selon l'une quelconque des revendications 10 à 11, dans lequel la tête de mesure (3) est configurée pour être actionnée automatiquement.

14. Système de mesure (1) selon la revendication 10, comprenant en outre des composants de support adaptés pour fixer la tête de mesure (3) au matériau ou à l'échantillon avec une structure en couches.

15. Un produit de programme informatique comprenant des instructions de programme pour amener un système informatique à exécuter un procédé pour caractériser un matériau avec une structure en couches selon l'une quelconque des revendications 1 à 9.
